# EUROPÄISCHE PATENTANMELDUNG

(11) **EP 1 711 033 A2**
(43) Veröffentlichungstag der Anmeldung: **11.10.2006**
(21) Anmeldenummer: 06111585.3
(22) Anmeldetag: 23.03.2006
(51) Int. Cl.: H04R 27/00

(54) **Anlage zur Ein- und Ausgabe von akustischen Informationen in einem Fahrzeug, insbesondere einem Schienenfahrzeug zur Personenbeförderung**

(30) Priorität: 05.04.2005 DE 102005016802
(71) Anmelder: SIEMENS AKTIENGESELLSCHAFT, 80333 München (DE)
(72) Erfinder: Deim, Volker, 91459, Markt Erlbach (DE); Dorn, Herrmann, 91074, Herzogenaurach (DE)

(57) **Zusammenfassung**

Die Erfindung betrifft eine Anlage zur Einbringung von akustischen Informationen für ein Fahrzeug, insbesondere ein Schienenfahrzeug zur Personenbeförderung, der eine Ausgabeeinrichtung (5) für die Informationen aufweist, mit einer Eingabeeinrichtung (1) zur Eingabe der Informationen und mit mindestens einer Übertragungsleitung (4), über welche die Ausgabeeinrichtung (5) mit der Eingabeeinrichtung (1) zur elektrischen Informationsübertragung verbunden ist. Damit auch bei einem Kurzschluss in der Übertragungsleitung und/oder einer der Eingabe- oder Ausgabeeinrichtungen oder bei Unterbrechung der Übertragungsleitung weitere Durchsagen möglich sind, wird vorgeschlagen, dass die Übertragungsleitung (4) als geschlossene Schleife ausgebildet ist, die vom Fahrzeuganfang zum Schienefahrzeugende und von dort wieder zurück zum Fahrzeuganfang verläuft, wobei die Eingabeeinrichtung (1) und Ausgabeeinrichtung (5)an einer Stelle der Schleife angeschlossen ist, und dass die Schleife zwei Trennvorrichtungen (10) aufweist, mit denen das zwischen den beiden Trennvorrichtungen (10) liegende Leitungsstück (3), insbesondere bei Vorliegen eines Kurzschlusses in diesem Leitungsstück (3), aus der Schleife herausnehmbar ist, wodurch dieses Leitungsstück (3) insbesondere von der angeschlossenen Eingabeeinrichtung (1) und Ausgabeeinrichtung (5) trennbar ist.

## Beschreibung

Anlage zur Ein- und Ausgabe von akustischen Informationen in einem Fahrzeug, insbesondere einem Schienenfahrzeug zur Personenbeförderung

Die Erfindung betrifft eine Anlage zur Ein- und Ausgabe von akustischen Informationen in ein Fahrzeug, insbesondere einem Schienenfahrzeug zur Personenbeförderung, gemäß dem Oberbegriff des Anspruchs 1.

Anlagen zur Informationsdurchsage in einem Fahrzeug, insbesondere einem Schienenfahrzeug zur Personenbeförderung, sind bekannt. Diese Anlagen weisen an einem oder mehreren Stellen des Fahrzeugs Sprachvorrichtungen auf, in welche vom Fahrzeugpersonal akustische Informationen eingegeben oder abgerufen werden können, wobei die Sprache mittels eines Gerätes in ein elektrisches Signal umgewandelt wird. Diese Sprachvorrichtungen sind über elektrische Verbindungsleitungen mit in den Wagen des Fahrzeuges vorhandenen Ausgabegeräten für die akustischen Wiedergabe der Informationen verbunden Die Verbindungsleitungen übertragen die Informationen zu den im Fahrzeug vorhandenen Ausgabegeräten. Dazu verläuft die Verbindungsleitung vom ersten bis zum letzten Wagen.

Nachteilig ist dabei, dass bei einem Kurzschluss in oder auf der Übertragungsleitung oder bei einer Unterbrechung der Verbindungsleitung keine Informationsdurchsagen mehr möglich sind. Dieselbe Auswirkung kann es haben, wenn sich der Kurzschluss in einem Gerät befindet, das an der Verbindungsleitung angeschlossen ist. Eine weitere Schwierigkeit besteht darin, dass ein Kurzschluss in oder auf der Übertragungsleitung nur schwer lokalisierbar ist. Bei gekoppelten Durchsagesystemen kann ein Kurzschluss in oder auf der Übertragungsleitung zu Rückwirkungen auf die anderen Systeme/ Anlagen führen, was mit Störungen der anderen Systeme/ Anlagen verbunden sein kann (z. B. bei Kopplung der Fahrzeuge).

Die Aufgabe der Erfindung ist es, eine Anlage zur Ein- und Ausgabe von akustischen Informationen für ein Fahrzeuge vorzuschlagen, bei der auch bei einem Kurzschluss in der Übertragungsleitung und/oder einem an der Leitung angeschlossenen Gerät oder bei einer Unterbrechung der Verbindungsleitung weitere Durchsagen möglich sind.

Die Aufgabe wird durch die Merkmale des Anspruchs 1 gelöst; die Unteransprüche betreffen vorteilhafte Ausgestaltungen.

Die Lösung der Aufgabe sieht vor, dass die Übertragungsleitung als geschlossene Schleife ausgebildet ist, die vom Fahrzeuganfang zum Fahrzeugende und von dort wieder zurück zum Fahrzeuganfang verläuft, wobei die Eingabeeinrichtung an einer Stelle der Schleife angeschlossen ist, und dass die Schleife zwei Trennvorrichtungen aufweist, mit denen das zwischen den beiden Trennvorrichtungen liegende Leitungsstück, insbesondere bei Vorliegen eines Kurzschlusses in oder auf diesem Leitungsstück, aus der Schleife herausnehmbar ist, wodurch dieses Leitungsstück insbesondere von den angeschlossenen Eingabeeinrichtung trennbar ist. Dadurch kann auf eine zweite unabhängige Durchsageanlage verzichtet werden, wodurch sich die Kosten reduzieren lassen, bei gleichzeitigem Funktionserhalt im Fehlerfall. Die Übertragungsleitung besteht dabei aus mindestens zwei Leitungsstücken, von denen mittels der Trennvorrichtungen das mit dem Kurzschluss (oder einer Unterbrechung) aus der Schleife herausgenommen wird. Das nicht herausgenommene Leitungsstück bildet dann eine voll funktionierende Übertragungsleitung mit angeschlossenen Ein- und Ausgabeeinrichtungen die weiterhin funktionsfähig sind.

Nach Abtrennen der fehlerhaften Übertragungsleitungen ist die Kopplung von Durchsageanlagen innerhalb eines Systems weiterhin möglich.

Zweckmäßigerweise sind mindestens zwei Eingabeeinrichtungen vorgesehen, von denen die eine am Fahrzeuganfang und die andere am Fahrzeugende elektrisch angeschlossen ist.

Zur Erhöhung der Sicherheit im Fehlerfall wird vorgeschlagen, dass mittels der beiden Trennanlagen eine der Eingabeeinrichtungen von der oder den anderen trennbar ist.

Um bei einem Fahrzeug mit mehreren Wagen eine Ein- und Ausgabe von akustischen Informationen im Fehlerfall sicherzustellen, wird vorgeschlagen, dass im Fahrzeug mindestens zwei Ausgabeeinrichtungen angeordnet sind, von denen die eine am vom Fahrzeuganfang zum Fahrzeugende verlaufenden und die andere am vom Fahrzeugende zum Fahrzeuganfang verlaufenden Leitungsstück angeschlossen ist. Speziell: Der Lautsprecherstrang jeder Ausgabeeinrichtung versorgt mindestens einen Lautsprecher in jedem Wagen /Abteil.

Beim Vorhandensein von mehreren Ausgabeeinrichtungen in jedem Wagen sind vorteilhafterweise in jedem Wagen etwa die Hälfte der Ausgabeeinrichtungen am vom Fahrzeuganfang zum Fahrzeugende verlaufenden und die übrigen Ausgabeeinrichtungen am vom Fahrzeugende zum Fahrzeuganfang verlaufenden Leitungsstück angeschlossen.

Kostengünstiger ist es, wenn bei einem Fahrzeug mit mehreren Wagen in jedem Wagen eine Ausgabeeinrichtung angeordnet ist, die zwei Ausgabelautsprecher versorgt, dass bei benachbarten Wagen die eine der beiden Ausgabeeinrichtungen am vom Fahrzeuganfang zum Fahrzeugende verlaufenden und die andere am vom Fahrzeugende zum Fahrzeuganfang verlaufenden Leitungsstück angeschlossen ist und dass einer der beiden von einer Ausgabeeinrichtung versorgten Ausgabelautsprecher im bezogen auf die Ausgabeeinrichtung jeweils benachbarten Wagen angeordnet ist.

Die Erfindung wird nachfolgend anhand einer Zeichnung näher beschrieben. Es zeigen:
- Figur 1: eine schematische Darstellung einer Anlage zur Durchsage von Informationen für ein Schienenfahrzeug mit einer Schleife und vier Trennvorrichtungen und
- Figur 2: die Lautsprecherverteilung der Anlage gemäß Figur 1.

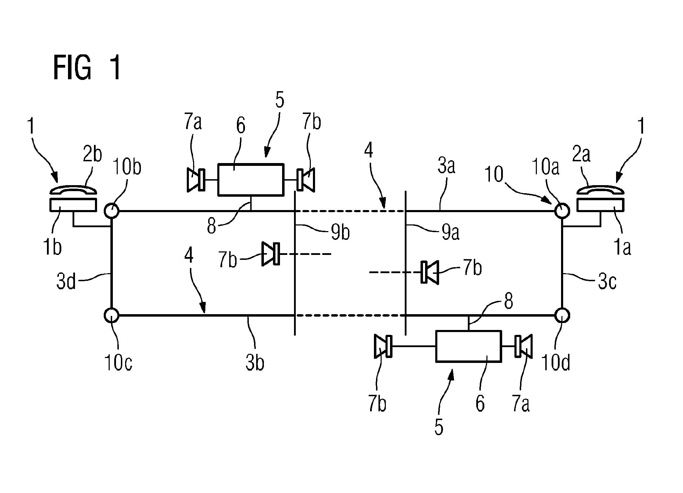

Figur 1 zeigt eine schematische Darstellung einer Anlage zur Informationsdurchsage für ein Fahrzeug zur Personenbeförderung, hier ein Schienenfahrzeug, wobei als Eingabeeinrichtungen 1 zwei Handsets 1a, 1b dienen, die einen Hörer 2a, 2b nach Art eines Telefonhörers umfassen. Jeder Hörer 2a, 2b weist ein Mikrofon (nicht gezeigt) auf, welches die Sprache einer Bedienperson in ein elektrisches Signal umwandelt. Die Handsets 1 sind mittels Übertragungsleitungen 4 mit Ausgabeeinrichtungen 5 für die durchzusagende Informationen verbunden, die einen Verstärker 6 aufweisen, an den jeweils zwei Lautsprecher 7a, 7b bzw. Ausgabelautsprecherstränge angeschlossen sind. Die Ausgabeeinrichtungen 5 sind über Leitungen 8 mit der Übertragungsleitung 4 verbunden. Wie Figur 1 zeigt, ist die aus Leitungsstücken 3 (3a, 3b, 3c, 3d) bestehende Übertragungsleitung 4 als geschlossene Schleife ausgebildet, die vom Fahrzeuganfang (linke Seite in Figur 1) zum Fahrzeugende (rechte Seite in Figur 1) verläuft. Dabei ist in Figur 1 nur der erste Wagen und der letzte Wagen mit jeweils einer Ausgabeeinrichtung 5 dargestellt, während die dazwischen liegenden Wagen (die zwischen den Linien 9a und 9b liegen) nur durch gestrichelte Linien angedeutet sind. An den Eckpunkten der in Figur 1 als Rechteck dargestellten Schleife sind Trennvorrichtungen 10 (10a, 10b, 10c, 10d) angeordnet, welche von einer Bedienperson betätigt werden können. Mittels der Trennvorrichtung 10 lassen sich die jeweils miteinander verbundenen Leitungsstückpaare 3a und 3c; 3c und 3b; 3b und 3d sowie 3d und 3a voneinander trennen und wieder verbinden. Dadurch ist es möglich, beim Auftreten eines Kurzschlusses in einem Leitungsstück 3a, 3b, 3c oder 3d dieses Leitungsstück 3a, 3b, 3c oder 3d aus der Schleife herauszunehmen, die dann allerdings nicht mehr geschlossen ist. Die Herausnahme eines Leitungsstücks 3a, 3b, 3c oder 3d bedeutet, dass dieses von allen Eingabeeinrichtungen 1 oder zumindest von einer dieser Eingabeeinrichtungen 1 getrennt ist. Werden beispielsweise die Trennvorrichtungen 10a, 10b geöffnet, so ist das Leitungsstück 3a nicht mehr mit den beiden Eingabeeinrichtungen 1 verbunden. Die Durchsage kann dann immer noch über die Ausgabeeinrichtungen 5, welche an dem Leitungsstück 3b hängen, erfolgen. (Sind an dem herausgenommenen Leitungsstücks 3a oder 3b zusätzliche Geräte angeschlossen, so werden auch diese Geräte aus der Schleife herausgenommenen. Dies kann erwünscht sein, wenn der Kurzschluss in dem Gerät auftritt und insbesondere dadurch den Kurzschluss in dem Leitungsstück 3a oder 3b verursacht.)

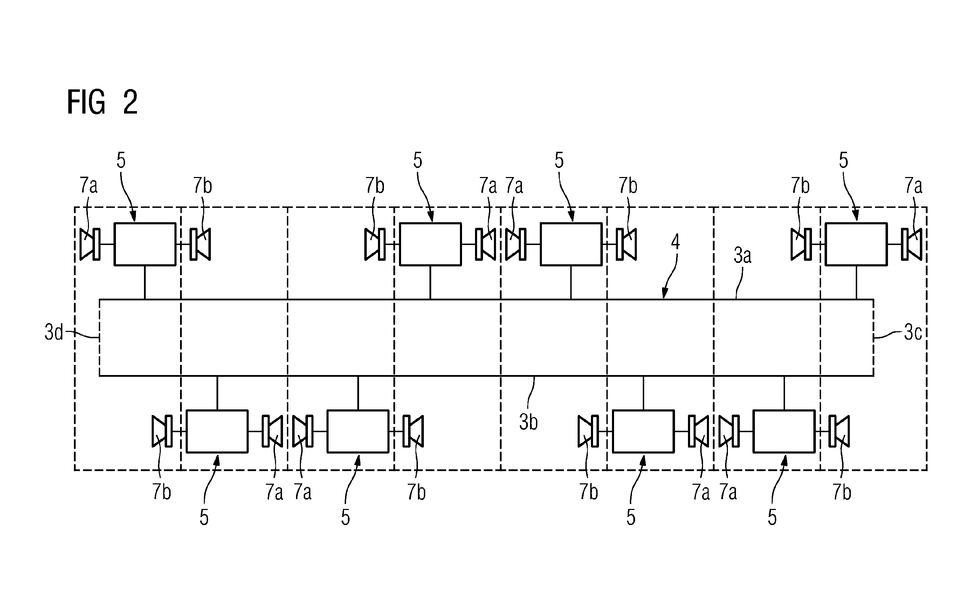

Im einfachsten Fall (nicht dargestellt in Figur 1 und 2) befinden sich in einem Schienenfahrzeug mit mehreren Wagen in jedem Wagen zwei oder mehr Ausgabeeinrichtungen 5, von denen die eine oder etwa die Hälfte der Ausgabeeinrichtungen 5 am Leitungsstück 3a und die andere bzw. die anderen am Leitungsstück 3b angeschlossen ist bzw. sind. Auf diese Weise wird erreicht, dass beim Heraustrennen eines Leitungsstücks, beispielsweise des Leitungsstücks 3a mittels der Trennvorrichtung 10a, 10b, die Durchsage über die "nicht heraus getrennten" Ausgabeeinrichtungen 5 erfolgen kann, also die, die am Leitungsstück 3b angeschlossen sind.

Sollte das Handset 1a einen Kurzschluss aufweisen, durch den die gesamte Schleife kurzgeschlossen ist, so kann durch Öffnen der Trennvorrichtung 10a, 10b das Leitungsstück 3c aus der Schleife herausgenommen werden, so dass die Durchsage weiter mit Hilfe des Handsets 1b erfolgen kann.

Durch Herausnehmen der einzelnen Leitungsstücke 3 ist es darüber hinaus möglich, einen Fehler in Form eines Kurzschlusses durch Öffnen und Schließen der entsprechenden Trennvorrichtungen 10a, 10b, 10c oder 10d zu orten.

Figur 1 deutet bereits an, dass von den beiden zu einer Ausgabeeinrichtung 5 gehörenden Lautsprechern 7a, 7b sich einer der Lautsprecher 7b jeweils im benachbarten Wagen befinden kann.

Figur 2 zeigt diese Ausführung detaillierter. So ist in Figur 2 in schematischer Darstellung ein Schienenfahrzeug mit acht Wagen dargestellt, durch den die Leitungsstücke 3a und 3b der Schleife verlaufen. Die Eingabeeinrichtungen 1 sind in Figur 2 der Übersichtlichkeit halber nicht eingezeichnet. Jeder Wagen ist mit einer Ausgabeeinrichtung 5 ausgestattet, wobei sich der eine der beiden Lautsprecher 7a, 7b, nämlich der Lautsprecher 7a, zusammen mit der Ausgabeeinrichtung 5 in dem zugehörigen Wagen befindet, während der zweite Lautsprecher 7b in dem unmittelbaren benachbarten Wagen angeordnet ist. Die Anordnung ist in Figur 2 so ausgelegt, dass sich in jedem Wagen genau zwei Lautsprecher 7a, 7b befinden, die allerdings jeweils zu zwei benachbarten Ausgabeeinrichtungen 5 gehören, die weiter an verschiedenen Leitungsstücken 3a und 3b angeschlossen sind.

## Patentansprüche

1. Anlage zur Ein- und Ausgabe von akustischen Informationen in einem Fahrzeug, insbesondere einem Schienenfahrzeug zur Beförderung von Personen, der eine Ausgabeeinrichtung (5) für die Informationen aufweist,
mit einer Eingabeeinrichtung (1) zur Eingabe der Informationen und mit mindestens einer Übertragungsleitung (4), über welche die Ausgabeeinrichtung (5) mit der Eingabeeinrichtung (1) zur elektrischen Informationsübertragung verbunden ist,
**dadurch gekennzeichnet,**
**dass** die Übertragungsleitung (4) als geschlossene Schleife ausgebildet ist, die vom Fahrzeuganfang zum Fahrzeugende und von dort wieder zurück zum Fahrzeuganfang verläuft, wobei die Eingabeeinrichtung (1) an einer Stelle der Schleife angeschlossen ist, und
**dass** die Schleife zwei Trennvorrichtungen (10) aufweist, mit denen das zwischen den beiden Trennschaltern (10) liegende Leitungsstück (3), insbesondere bei Vorliegen eines Kurzschlusses in diesem Leitungsstück (3), aus der Schleife herausnehmbar ist, wodurch dieses Leitungsstück (3) insbesondere von der angeschlossenen Eingabeeinrichtung (1) trennbar ist.

2. Anlage nach Anspruch 1,
**dadurch gekennzeichnet,**
**dass** mindestes zwei Eingabeeinrichtungen (1) vorgesehen sind, die an verschiedenen Leitungsabschnitten, vorzugsweise eine am Fahrzeuganfang und die andere am Fahrzeugende elektrisch angeschlossen ist.

3. Anlage nach Anspruch 1 oder 2,
**dadurch gekennzeichnet,**
**dass** mittels der beiden Trennvorrichtungen (10) eine der Eingabeeinrichtungen (1) von der anderen trennbar ist.

4. Anlage nach einem der Ansprüche 1 - 3,
**dadurch gekennzeichnet,**
**dass** bei einem Fahrzeug mit mehreren Wagen in jedem Wagen zwei Ausgabeeinrichtungen (5) angeordnet sind, von denen die eine am vom Fahrzeuganfang zum Fahrzeugende verlaufenden und die andere am vom Fahrzeugende zum Fahrzeuganfang verlaufenden Leitungsstück (3) angeschlossen ist.

5. Anlage nach Anspruch 4,
**dadurch gekennzeichnet,**
**dass** in jedem Wagen etwa die Hälfte der Ausgabeeinrichtungen (5) am vom Fahrzeuganfang zum Fahrzeugende verlaufenden und die übrigen Ausgabeeinrichtungen (5) am vom Fahrzeugende zum Fahrzeuganfang verlaufenden Leitungsstück (3) angeschlossen sind.

6. Anlage nach einem der Ansprüche 1 - 3,
**dadurch gekennzeichnet,**
**dass** bei einem Fahrzeug mit mehreren Wagen in jedem Wagen eine Ausgabeeinrichtung (5) angeordnet ist, die zwei Ausgabelautsprecher (7a, 7b) versorgt, dass bei benachbarten Wagen die eine der beiden Ausgabeeinrichtungen (5) am vom Fahrzeuganfang zum Fahrzeugende verlaufenden und die andere am vom Fahrzeugende zum Fahrzeuganfang verlaufenden Leitungsstück (3) angeschlossen ist und dass einer der beiden von einer Ausgabeeinrichtung versorgten Ausgabelautsprecher (7a, 7b) im bezogen auf die Ausgabeeinrichtung (5) jeweils benachbarten Wagen angeordnet ist.
